# EUROPÄISCHE PATENTSCHRIFT

(11) **EP 3 406 817 B1**
(45) Veröffentlichungstag und Bekanntmachung des Hinweises auf die Patenterteilung: **17.07.2024**
(21) Anmeldenummer: 18171232.4
(22) Anmeldetag: 08.05.2018
(51) Int. Cl.: E04D 5/10, B32B 15/14, D06N 5/00, E04D 12/00

(54) **METALLBESCHICHTETE DACHUNTERSPANNBAHN**
METAL COATED ROOFING UNDERLAY
MEMBRANE DE SOUS-TOITURE REVÊTUE DE MÉTAL

(30) Priorität: 24.05.2017 DE 102017111352
(43) Veröffentlichungstag der Anmeldung: 28.11.2018
(73) Patentinhaber: BMI Deutschland GmbH, 61440 Oberursel (Taunus) (DE)
(72) Erfinder: Schröer, Jörn, 58313 Herdecke (DE); Schulze, Dirk, 60322 Frankfurt (DE); Mawson, Christopher, 58706 Menden (DE); Eggert, Silivia, 64390 Erzhausen (DE)
(74) Vertreter: Grundmann, Dirk

(56) Entgegenhaltungen:
- EP-A1- 2 312 073
- EP-A2- 0 074 028
- EP-A2- 1 930 363
- WO-A1-2014/205502
- DE-A1- 2 827 136

## Beschreibung

### Gebiet der Technik

Die Erfindung betrifft ein flächiges Schichtgebilde zur Verwendung als Dachunterspannbahn gemäß Gattungsbegriff des Anspruchs 1.

### Stand der Technik

Aus der EP 0 074 028 A2 ist eine Materialbahn mit einem dreilagigen Aufbau vorbekannt. Eine mittlere Lage besteht aus einem Gittergewebe mit monofilen Längs- und Querfäden. Auf das Gittergewebe sind beidseitig Faservliesbahnen aufgeklebt, welche wasserdampfdurchlässig, aber wasserdicht sind. Die Faservliesbahnen besitzen eine durch Aluminiumaufdampfen hergestellte Metallbeschichtung. Um die Metallbeschichtung vor Korrosion und mechanischen Beschädigungen zu schützen, sind Schutzschichten aufgebracht, welche aus Polyethylen bestehen.

Aus der DE 28 27136 A1 ist eine bitumierte Dachbahn bekannt, bei der zwischen zwei Bitumendeckschichten eine auf einem Vliesstoff aufgebrachte Metallfolie angeordnet ist.

Die WO 2014/205502 beschreibt ein perforiertes Schichtengebilde mit einem mittleren Polyethylenschaum. Eine mit einer Beschichtung versehene Aluminiumfolie ist über eine Klebeschicht mit dem Schichtensystem verbunden.

Die EP 2 312 073 A1 beschreit einen mikroporösen Film, auf dem eine 20µm starke thermoplastische Folie aufgebracht ist, auf der sich wiederum eine Metallschicht befindet, die von einer Abdeckschicht abgedeckt ist.

Die EP 1 930 363 A2 beschreibt eine metallbeschichtete Folie, wobei die Folie für elektromagnetische Strahlung im Wellenlängenbereich von 1 bis 18 GHz dämpfende Wirkung entfaltet. Die mittlere Porengröße des Funktionsfilms beträg 0,1 bis 5 µm.

Die Metallisierung von Dachunterspannbahnen bringt den Vorteil, dass die nach außen weisende Metallbeschichtung infrarotes Licht reflektiert, so dass im Sommer der Wärmeeintrag durch die Dachunterspannbahn in das darunterliegende Dach vermindert wird. Eine metallbeschichtete Dachunterspannbahn hat allerdings den Nachteil, dass bei der Verlegung die Metallbeschichtung beschädigt oder abgerieben werden kann. Ferner erschwert die Reflektion sichtbaren Lichtes durch die Metallbeschichtung die Verlegearbeiten, da sie eine Blendwirkung für den Verarbeiter entfaltet.

### Zusammenfassung der Erfindung

Der Erfindung liegt die Aufgabe zugrunde, eine gattungsgemäße Dachunterspannbahn gebrauchsvorteilhaft weiterzubilden.

Gelöst wird die Aufgabe durch die im Anspruch 1 angegebene Erfindung. Die Unteransprüche stellen vorteilhafte Weiterbildungen Erfindung dar.

Zunächst und im Wesentlichen wird ein flächiges Schichtgebilde vorgeschlagen, welches für die Verwendung als Dachunterspannbahn oder ganz allgemein als Baufolie geeignet ist. Das Schichtgebilde hat einen mehrschichtigen Aufbau. Zwischen einer Tragschicht und einer Abdeckschicht erstreckt sich ein Funktionsfilm, der eine Dichtschicht ausbildet, die wasserdicht, aber auch wasserdampfdurchlässig ist. Erfindungsgemäß ist diese Dichtschicht mit einer Metallbeschichtung beschichtet. Bei dem Metall kann es sich um Aluminium handeln. Das Metall kann unmittelbar auf die Dichtschicht aufgedampft werden. Bei der Dichtschicht handelt es sich um einen mikroporösen Film mit einer Porengröße von 0,5 bis 5 µm, wobei die Schichtdicke der Metallbeschichtung kleiner ist, als die mittlere Porengröße. Die Schichtdicke kann zwischen 20 und 80 nm, bevorzugt etwa 50 nm betragen. Die insbesondere unmittelbar auf die Dichtschicht aufgetragene Metallschicht hat erfindungsgemäß keine freie Oberfläche. Sie wird vielmehr von der Abdeckschicht abgedeckt. Die Abdeckschicht schützt die Metallbeschichtung gegen mechanische Beschädigung und insbesondere gegen Abrieb. Die Abdeckschicht hat darüber hinaus auch eine optische Filterfunktion. Sie wirkt als Tiefpassfilter. Während infrarotes Licht weitestgehend durch die Abdeckschicht hindurchtritt, aber an der Metallbeschichtung reflektiert wird, ist die Abdeckschicht für UV-Licht und sichtbares Licht nur geringfügig durchlässig. Die Abdeckschicht kann auch im (Weiter auf Seite 3 der ursprünglich eingereichten Anmeldungsunterlagen) Wesentlichen undurchlässig für sichtbares Licht und UV-Licht sein. Dies hat zur Folge, dass ein Verarbeiter nicht auf metallglänzende Flächen blicken muss bzw. dass der Verarbeiter durch reflektiertes sichtbares Licht bei der Verlegearbeit nicht geblendet wird. In einer alternativen Variante der Erfindung kann die Tragschicht die Funktion eines Tiefpassfilters ausüben, der ultraviolettes Licht oder sichtbares Licht nur geringfügig durchlässt, aber durchlässig für infrarotes Licht ist. Erfindungsgemäss handelt es sich bei der Abdeckschicht um ein Vlies. Bei der Tragschicht kann es sich auch um ein Vlies handeln. Das Vlies besteht bevorzugt aus Polypropylen. Die Abdeckschicht ist an Bondingpunkten thermisch an die Beschichtung bzw. die Dichtschicht gebunden. Die Verbindung kann aber auch über einen Kleber erfolgen, der lokal, bspw. in dünnen Fäden, auf die Metallschicht aufgebracht wird. In ähnlicher Weise kann die Tragschicht mit der Dichtschicht verbunden werden. Auch hier kann die Verbindung durch ein thermisches Bondingverfahren unter Verwendung eines Kalanders erfolgen. Es ist aber auch möglich, die Tragschicht mit einem Schmelzkleber in derselben Weise zu verbinden, wie die Abdeckschicht mit der Dichtschicht bzw. der Metallbeschichtung verbunden wird. Die mikroporöse Dichtschicht kann aus Polyolefin bestehen, insbesondere aus Polyethylen oder Polypropylen. Sie kann eine Materialstärke zwischen 20 und 30 µm besitzen. Es ist ferner vorgesehen, dass die mechanische Verbindung der Schichten des Schichtengebildes über eine lokale Erwärmung mit einer oberflächenstrukturierten Kalanderwalze erfolgt. Dabei werden die Schichten des Schichtengebildes punktuell erwärmt bzw. gegeneinander gedrückt. Dies kann im Bereich der Metallbeschichtung zur Folge haben, dass durch Auf- oder Anschmelzen die Metallbeschichtung geringfügig zerstört wird, so dass eine unmittelbare Verbindung zwischen der Dichtschicht und der Abdeckschicht erfolgt. Dichtschicht und Abdeckschicht können so auch punktuell stoffschlüssig miteinander verbunden sein.

### Kurze Beschreibung der Zeichnungen

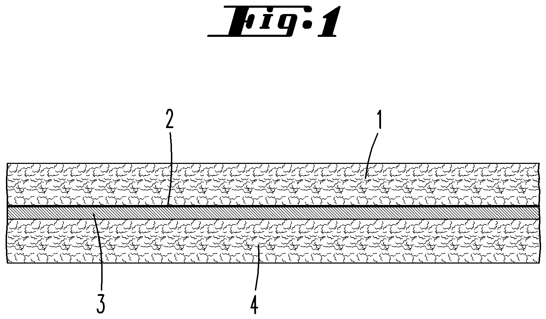

Nachfolgend wird die Erfindung anhand der beigefügten Zeichnung im Detail erläutert. Die Figur 1 zeigt den Querschnitt durch eine Dachunterspannbahn.

### Beschreibung der Ausführungsformen

Die Zeichnung zeigt den Querschnitt durch die erfindungsgemäße, als Dachunterspannbahn oder anderweitige Baufolie ausgebildete Struktur, bei der es sich um ein flächiges Schichtgebilde handelt, das insbesondere zur Auflage auf Dachunterkonstruktionen oder Dachdämmungen bestimmt ist. Die im Ausführungsbeispiel dargestellte Dachunterspannbahn besitzt eine Tragschicht 4, auf der sich eine Dichtschicht 3 befindet, die mit einer Metallbeschichtung 2 versehen ist. Auf der Metallbeschichtung 2 ist eine Abdeckschicht 1 aufgebracht. Die Dachunterspannbahn ist im verlegten Zustand Teil eines Daches, wobei die Tragschicht 4 zur Dachunterkonstruktion bzw. zu einer Dachdämmung weist. Die Tragschicht 4 kann insbesondere auf eine Lattung aufgebracht werden. Auf die Abdeckschicht 1 wird die Dachhaut aufgebracht. Hierzu können auf der Abdeckschicht 1 Dachlatten montiert werden, an denen Dachsteine, insbesondere Dachziegel, befestigt werden, so dass die Abdeckschicht 1 zu den Dachsteinen weist.

Beim Ausführungsbeispiel besteht die Tragschicht 4 aus einem Polypropylenfilm mit einer Materialstärke von etwa 0,3 bis 0,5 mm.

Die Tragschicht 4 kann über ein thermisches Bondingverfahren mit der Dichtschicht 3 verbunden sein. Die Verbindung kann auch durch einen Schmelzkleber erzielt werden, wobei der Schmelzkleber derart appliziert wird, dass die Dichtschicht 3 ihre von Hause aus wasserdampfdurchlässige Eigenschaft und wasserundurchlässige Eigenschaft behält.

Die Dichtschicht 3 ist bevorzugt ein mikroporöser Film und besitzt eine Materialstärke von 20 bis 30 µm. Sie kann aus einem Polyolefin, bspw. Polyethylen oder Polypropylen bestehen. Die Dichtschicht 3 wird in bekannter Weise dadurch wasserdampfdurchlässig gemacht, dass dem Film bei seiner Fertigung Hartstoffteilchen beigemischt werden und der Film anschließend monoaxial oder biaxial gereckt wird.

Die Dichtschicht 3 besitzt eine Metallbeschichtung 2. Bei der Metallbeschichtung 2 handelt es sich um eine aufgedampfte Beschichtung aus Aluminium. Die Schichtdicke der Metallbeschichtung 2 ist geringer als die mittlere Porengröße der Dichtschicht 3. Die mittlere Porengröße kann zwischen 0,1 und 5 µm betragen. Die Dicke der Metallbeschichtung 2 beträgt 20 bis 80 nm und bevorzugt etwa 50 nm.

Auf die Metallbeschichtung 2 ist eine Abdeckschicht 1 aufgebracht. Bei der Abdeckschicht handelt es sich um ein Vlies, insbesondere ein Polypropylenvlies mit einer Schichtdicke von 0,3 bis 0,5 mm.

Die Abdeckschicht 1 kann über thermisches Bonding oder mittels eines Schmelzklebers mit der Metallbeschichtung 2 verbunden sein. Auch hier sind die Verbindungspunkte zwischen Abdeckschicht 1 und Metallbeschichtung 2 auf lokale Bereiche beschränkt, so dass die Wasserdampfdurchlässigkeit der Dichtschicht 3 nicht beeinträchtigt wird. Deren Wasserdampfdurchlässigkeit wird auch nicht durch die Metallbeschichtung 2 beeinträchtigt, da die Metallbeschichtung 2 wesentlich dünner ist, als die mittlere Porengröße der Dichtschicht 3. Die Abdeckschicht 1 kann auch punktuell unmittelbar mit der Dichtschicht 3 verbunden sein, so dass die Dichtschicht 3 mit der Abdeckschicht 1 verankert ist.

Die Abdeckschicht 1 und ggf. die Tragschicht 4 sind im Wesentlichen durchlässig für infrarotes Licht. Sie haben nur eine geringe Durchlässigkeit für sichtbares Licht und/oder für UV-Licht. Das durch die als Bandpassfilter wirkende Abdeckschicht 1 bzw. Tragschicht 4 hindurchtretende infrarote Licht wird an der Metallbeschichtung 2 reflektiert. Geringfügiges, durch die Abdeckschicht 1 hindurchtretendes sichtbares Licht sowie durch die Abdeckschicht 1 hindurchtretendes UV-Licht wird ebenfalls an der Metallbeschichtung 2 reflektiert.

Die Metallbeschichtung 2 erfüllt somit zwei Aufgaben: Sie verhindert einen Wärmedurchtritt von außen in das Dachinnere, indem sie infrarote Strahlung reflektiert. Sie schützt die Dichtschicht 3 vor einer durch eine UV-Bestrahlung verursachte Alterung, da sie auch UV-Licht, welches durch die Abdeckschicht 1 hindurchtritt, reflektiert.

Die Abdeckschicht 1 erfüllt ebenfalls eine Doppelfunktion: Sie schützt die Metallbeschichtung 2 gegen eine mechanische Beeinträchtigung bei der Verlegung, bspw. gegen Abrieb. Sie vermeidet darüber hinaus, dass die Metallschicht 2 eine Blendwirkung entfaltet, indem sie das Hindurchtreten sichtbaren Lichtes durch die Abdeckschicht 1 weitestgehend verhindert.

Die Metallschicht 2 kann aufgrund ihrer erfindungsgemäßen Anordnung dünner ausgebildet sein, als sie es hätte sein müssen, wenn Sie auf der sichtbaren Oberfläche einer Dachunterspannbahn angeordnet wäre.

Für die Abdeckschicht 1 kommt ein Vliesmaterial zum Einsatz, das eine besonders hohe Durchlässigkeit für infrarote Strahlung aufweist. Das Infrarotlicht wird ohne die störende Blendwirkung für den Verarbeiter an der Metallschicht 1 reflektiert. Es ist deshalb von besonderem Vorteil, wenn die Metallschicht zwischen dem mikroporösen Film, der von der Dichtschicht 3 gebildet ist und einen Vlies liegt, das von der Abdeckschicht 1 gebildet ist.

### Liste der Bezugszeichen

- 1: Abdeckschicht
- 2: Metallbeschichtung
- 3: Dichtschicht
- 4: Tragschicht, Vlies

## Patentansprüche

1. Flächiges Schichtgebilde zur Verwendung als Dachunterspannbahn, bestehend aus einer Tragschicht (4) und einer Abdeckschicht (1) und einer zwischen Tragschicht (4) und Abdeckschicht (1) angeordneten Dichtschicht (3), die auf ihrer zur Abdeckschicht (1) weisenden Seite eine Metallbeschichtung (2) aufweist, wobei die Abdeckschicht (1) einen optischen Tiefpassfilter ausbildet, der infrarotdurchlässig ist und für sichtbares und UV-Licht zumindest schwer durchlässig ist, **dadurch gekennzeichnet, dass** die Abdeckschicht (1) aus einem Vlies besteht.

2. Flächiges Schichtgebilde nach Anspruch 1, **dadurch gekennzeichnet, dass** die Abdeckschicht (1) und die Tragschicht (4) jeweils aus einem Vlies bestehen.

3. Flächiges Schichtgebilde nach einem der vorhergehenden Ansprüche, **dadurch gekennzeichnet, dass** die Dichtschicht (3) von einem mikroporösen Film oder mikroperforierten Film gebildet ist.

4. Flächiges Schichtgebilde nach einem der vorhergehenden Ansprüche, **dadurch gekennzeichnet, dass** die Metallbeschichtung (2) aus auf der Dichtschicht (3) aufgedampftem Aluminium besteht, und/oder, dass die Schichtdicke der Metallbeschichtung (2) kleiner ist, als eine mittlere Porendichte der wasserdichten, aber wasserdampfdurchlässigen Dichtschicht (3).

5. Flächiges Schichtgebilde nach einem der vorhergehenden Ansprüche, **dadurch gekennzeichnet, dass** die Tragschicht (4) und/oder die Abdeckschicht (1) aus Polypropylen besteht und eine Schichtdicke aufweist, die zwischen 0,3 und 0,5 mm liegt.

6. Flächiges Schichtgebilde nach einem der vorhergehenden Ansprüche, **dadurch gekennzeichnet, dass** die Dichtschicht (3) aus einem Polyolefin, insbesondere Polyethylen oder Polypropylen besteht und insbesondere 20 bis 30 µm dick ist.

7. Flächiges Schichtgebilde nach einem der vorhergehenden Ansprüche, **dadurch gekennzeichnet, dass** die Verbindung der Abdeckschicht (1) mit der Metallbeschichtung (2) und/oder die Verbindung der Tragschicht (4) mit der Dichtschicht (3) über durch thermisches Verfestigen erzeugte Bonding-Punkte erreicht ist.

## Claims

1. Planar layered structure for use as a roof underlay, consisting of a supporting layer (4) and a covering layer (1) and a sealing layer (3) which is arranged between the supporting layer (4) and the covering layer (1) and which has a metal coating (2) on its side facing the covering layer (1), wherein the covering layer (1) forms an optical low-pass filter which is permeable to infrared light and at least slightly permeable to visible and UV light, wherein the covering layer (1) consists of a non-woven fabric.

2. Planar layered structure according to claim 1, **characterized in that** the covering layer (1) and the supporting layer (4) each consist of a non-woven fabric.

3. Planar layered structure according to one of the preceding claims, **characterized in that** the sealing layer (3) is formed by a microporous film or microperforated film.

4. Planar layered structure according to one of the preceding claims, **characterized in that** the metal coating (2) consists of aluminium vapour-deposited on the sealing layer (3), and/or **in that** the layer thickness of the metal coating (2) is smaller than an average pore density of the waterproof but water-vapour-permeable sealing layer (3).

5. Planar layered structure according to one of the preceding claims, **characterized in that** the supporting layer (4) and/or the cover layer (1) consists of polypropylene and has a layer thickness of between 0.3 and 0.5 mm.

6. Planar layered structure according to one of the preceding claims, **characterized in that** the sealing layer (3) consists of a polyolefin, in particular polyethylene or polypropylene, and is in particular 20 to 30 µm thick.

7. Planar layered structure according to one of the preceding claims, **characterized in that** the bonding of the covering layer (1) to the metal coating (2) and/or the bonding of the supporting layer (4) to the sealing layer (3) is achieved via bonding points produced by thermal solidification.

## Revendications

1. Structure stratifiée plane pour utilisation en tant que membrane de sous-toiture composée d'une couche de support (4) et d'une couche de couverture (1) et d'une couche d'étanchéification (3) disposée entre la couche de support (4) et la couche de couverture (1), qui comporte un revêtement métallique (2) sur son côté tourné vers la couche de couverture (1), sachant que la couche de couverture (1) constitue un filtre passe-bas optique, qui est perméable aux infrarouges et est au moins difficilement perméable à la lumière visible et UV, **caractérisée en ce que** la couche de couverture (1) est composée d'un matériau non tissé.

2. Structure stratifiée plane selon la revendication 1, **caractérisée en ce que** la couche de couverture (1) et la couche de support (4) sont respectivement composées d'un matériau non tissé.

3. Structure stratifiée plane selon l'une quelconque des revendications précédentes, **caractérisée en ce que** la couche d'étanchéification (3) est formée d'un film microporeux ou d'un film microperforé.

4. Structure stratifiée plane selon l'une quelconque des revendications précédentes, **caractérisée en ce que** le revêtement métallique (2) est composé d'aluminium déposé par vaporisation sur la couche d'étanchéification (3) et/ou **en ce que** l'épaisseur de couche du revêtement métallique (2) est plus petite qu'une densité de pores moyenne de la couche d'étanchéification (3) étanche à l'eau, mais perméable à la vapeur d'eau.

5. Structure stratifiée plane selon l'une quelconque des revendications précédentes, **caractérisée en ce que** la couche de support (4) et/ou la couche de couverture (1) est composée de polypropylène et comporte une épaisseur de couche qui se situe entre 0,3 et 0,5 mm.

6. Structure stratifiée plane selon l'une quelconque des revendications précédentes, **caractérisée en ce que** la couche d'étanchéification (3) est composée d'une polyoléfine, en particulier de polyéthylène ou de polypropylène et a en particulier une épaisseur de 20 à 30 µm.

7. Structure stratifiée plane selon l'une quelconque des revendications précédentes, **caractérisée en ce que** la liaison de la couche de couverture (1) avec le revêtement métallique (2) et/ou la liaison de la couche de support (4) avec la couche d'étanchéification (3) est obtenue par des points d'encollage produits par renforcement thermique.
